(19) Europäisches Patentamt
European Patent Office
Office européen des brevets

(11) **EP 4 365 990 A1**

(12) **EUROPEAN PATENT APPLICATION**
published in accordance with Art. 153(4) EPC

(43) Date of publication:
08.05.2024 Bulletin 2024/19

(21) Application number: 22833372.0

(22) Date of filing: 13.04.2022

(51) International Patent Classification (IPC):
*H01M 4/525* (2010.01)       *H01M 4/505* (2010.01)
*C01G 53/00* (2006.01)       *H01M 10/052* (2010.01)

(52) Cooperative Patent Classification (CPC):
**C01G 53/00; H01M 4/505; H01M 4/525;**
**H01M 10/052;** Y02E 60/10

(86) International application number:
**PCT/KR2022/005383**

(87) International publication number:
**WO 2023/277316 (05.01.2023 Gazette 2023/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 28.06.2021 KR 20210084148

(71) Applicant: Samsung SDI Co., Ltd.
Yongin-si, Gyeonggi-do 17084 (KR)

(72) Inventors:
• **CHOI, Seung Yeon**
Yongin-Si Gyeonggi-do 17084 (KR)
• **KIM, Soo Hyeon**
Yongin-Si Gyeonggi-do 17084 (KR)
• **KIM, Jong Min**
Yongin-Si Gyeonggi-do 17084 (KR)
• **YANG, Woo Young**
Yongin-Si Gyeonggi-do 17084 (KR)

(74) Representative: **Marks & Clerk LLP**
**15 Fetter Lane**
**London EC4A 1BW (GB)**

(54) **POSITIVE ELECTRODE ACTIVE MATERIAL FOR LITHIUM SECONDARY BATTERY, PREPARATION METHOD THEREFOR, AND LITHIUM SECONDARY BATTERY COMPRISING POSITIVE ELECTRODE CONTAINING POSITIVE ELECTRODE ACTIVE MATERIAL**

(57) Disclosed are: a positive electrode active material for a lithium secondary battery, the positive electrode active material including a nickel-based active material containing 60 mol% or more of nickel, and including a large crystal particle which has a size of 1 $\mu$m to 10 $\mu$m and contains a lanthanide element therein; a method of manufacturing the same; and a lithium secondary battery including a positive electrode including the positive electrode active material.

FIG. 7A

SDI 5.0kV 8.6mm x2.50k SE(M)          20.0μm

EP 4 365 990 A1

**Description**

TECHNICAL FIELD

Provided are a positive electrode active material for a lithium secondary battery, a method of manufacturing the same, and a lithium secondary battery including a positive electrode including the positive electrode active material.

BACKGROUND ART

With the development of portable electronic devices, communication devices, and the like, the development of a lithium secondary battery having high energy density is highly demanded. However, the safety of the lithium secondary battery having high energy density may deteriorate, and thus the improvement of the safety is needed.
As a positive electrode active material for the lithium secondary battery, a lithium-nickel-manganese-cobalt composite oxide, a lithium cobalt oxide, and the like are used.
To manufacture a lithium secondary battery having improved lifetime characteristics, a method using a positive electrode including a single crystalline positive electrode active material has been suggested.
However, in a process of manufacturing positive electrode active materials, a single crystalline positive electrode active material known so far causes agglomeration of particles, reduction in productivity, an increase in residual lithium, and decreases in capacity, lifetime, and rate performance, and therefore improvement thereof is demanded.

DESCRIPTION OF EMBODIMENTS

TECHNICAL PROBLEM

An aspect is to provide a novel positive electrode active material for a lithium secondary battery.
Another aspect is to provide a method of preparing the above-described positive electrode active material for a lithium secondary battery.
Another aspect is to provide a lithium secondary battery including a positive electrode for a lithium secondary battery, the positive electrode including the above-described positive electrode active material.

SOLUTION TO PROBLEM

According to an aspect, provided is a positive electrode active material for a lithium secondary battery, the positive electrode active material including 60 mol% or more of nickel, and including a large crystal particle which has a size of 1 $\mu$m to 10 $\mu$m and contains a lanthanide element therein.
According to another aspect,

provided is a method of preparing a positive electrode active material for a lithium secondary battery, the method including: mixing a nickel-based active material precursor, a lithium precursor, and a lanthanide element precursor, and performing a first heat treatment while controlling a mixing molar ratio of lithium to metals other than lithium to be in a range of 0.8 to 1; and
adding a lithium precursor to the heat-treated product, and performing a second heat treatment while controlling a mixing molar ratio of lithium to metals other than lithium to be in a range of 0.95 to 1.05.

According to another aspect, provided is a method of preparing a positive electrode active material for a lithium secondary battery, the method including: mixing a nickel-based precursor containing a lanthanide element, and a lithium precursor, and performing a first heat treatment while controlling a mixing molar ratio of lithium to metals other than lithium to be in a range of 0.8 to 1; and
adding a lithium precursor to the first heat-treated product and performing a second heat treatment while controlling a mixing molar ratio of lithium to metals other than lithium to be in a range of 0.95 to 1.05.
The first heat treatment is performed in an oxidizing gas atmosphere at 850 °C to 950 °C, and
the second heat treatment is performed at 700 °C to 800 °C.
According to another aspect, provided is a lithium secondary battery including a positive electrode including the above-described positive electrode active material.

ADVANTAGEOUS EFFECTS OF DISCLOSURE

A positive electrode active material according to an aspect, in which grain growth has been accelerated, reduces an amount of residual lithium, and inhibits oxygen desorption from a surface, and thus a lithium secondary battery having improved lifetime characteristics may be manufactured using the positive electrode active material.

BRIEF DESCRIPTION OF DRAWINGS

FIGS. 1A to 1C are scanning electron microscope (SEM) images of a nickel-based active material precursor obtained according to Preparation Example 1, immediately after performing a first heat treatment, wherein FIGS. 1B and 1C are enlarged images of FIG. 1A.
FIGS. 2A to 2C are SEM images of a nickel-based active material obtained according to Example 1.
FIGS. 3A to 3C are SEM images of a nickel-based active material obtained according to Example 2.
FIGS. 4A to 4C are SEM images of a nickel-based active material obtained according to Example 3.
FIG. 5 shows high temperature lifetime characteristics in coin cells manufactured according to Manufacturing Examples 1 and 2 and Comparative Manufacturing Example 2.
FIG. 6 is a schematic diagram of a lithium secondary battery according to an embodiment.
FIGS. 7A to 7C respectively show SEM images of positive electrode active materials obtained according to Examples 1 and 2 and Comparative Example 1.
FIG. 8 shows X-ray diffraction analysis spectrum for positive electrode active materials according to Example 1 and Comparative Examples 1 and 2.

[Explanation of Reference numerals]

| 81: | Lithium battery | 82: | Negative electrode |
| 83: | Positive electrode | 84: | Separator |
| 85: | Battery case | 86: | Cap assembly |

MODE OF DISCLOSURE

Hereinafter, a positive electrode active material for a lithium secondary battery according to an embodiment, a method of preparing the same, a positive electrode for a lithium secondary battery including the positive electrode active material, and a lithium secondary battery including the positive electrode will be described in detail.

A nickel-based active material in a single crystal state, containing 60 mol% or more of nickel, has excellent capacity characteristics, but causes agglomeration of particles during a high-temperature heat treatment for single crystallization and a reduction in productivity, and thus improvement thereof is needed. In order to solve such a phenomenon, a method of using an alkali-based grain growth accelerator was proposed.

However, when the alkali-based grain growth accelerator is used, agglomeration of particles is slightly alleviated, but the residual grain growth accelerator after the heat treatment acts as a resistor, thereby deteriorating the lifetime characteristics of a lithium secondary battery using a positive electrode containing the nickel-based active material.

In order to solve the above-described task, the inventors hereby provide a positive electrode active material including a lanthanide element in a single crystal.

A positive electrode active material according to an embodiment is a large crystal particle including a lanthanide element therein, and grain growth may be accelerated without using an alkali-based grain growth accelerator, such as NaCl and KCl, which causes deterioration in cell performance during preparing of the positive electrode active material. In addition, since the positive electrode active material has high oxygen storage capacity, a lithium secondary battery having an improved lifetime may be manufactured by suppressing oxygen desorption when using the positive electrode active material.

In the present specification, the expression "inside a large crystal particle" refers to a central region of the large crystal particle that excludes a surface of the large crystal particle.

The positive electrode active material for a lithium secondary battery, according to an embodiment, includes a nickel-based active material containing 60 mol% or more of nickel and has a large crystal particle form containing a lanthanide element therein. The above-described nickel-based active material and the positive electrode active material are in a single-crystal state, and the single-crystal state may be observed through a high resolution transmission electron microscope (HRTEM).

In the specification, the "large crystal particle" is in a single crystal form, and may have a one-body particle form, a secondary particle form in which primary particles are aggregated, or a combination thereof. The large crystal particle may be a one-body particle having a size of 1 $\mu$m to 10 $\mu$m, a secondary particle in which primary particles are aggregated, or a combination thereof. The primary particle may have a size of 1 $\mu$m to 10 $\mu$m.

Herein, when the particle is spherical, the "size" indicates an average particle diameter, and when the particle is non-spherical, the "size" indicates the length of a major axis. The average particle diameter and the length of the major axis may be confirmed by an electron scanning microscope or a particle size analyzer. In an embodiment of the present specification, the particle size may be evaluated through a scanning electron microscope.

Herein, the term "one-body particle" indicates a particle having a structure in which particles are separated and/or dispersed in independent phases in which particles are not aggregated in terms of morphology. A particle in contrast to such one-body particle may have a structure in which small-sized particles (primary particles) are physically and/or chemically aggregated to form a relatively large particle (a secondary particle).

The one-body particle has a size of 2 $\mu$m to 8 $\mu$m, for example, for example 3 $\mu$m to 7 $\mu$m, and the secondary particle has a size of 5 $\mu$m to 30 $\mu$m, 10 $\mu$m to 25 $\mu$m, for example, 10 $\mu$m to 20 $\mu$m.

The positive electrode active material according to an embodiment includes a large crystal particle, and a movement path for lithium ions to reach a surface of the nickel-based active material is lengthened. Accordingly, the formation of surface impurities may be minimized, wherein the surface impurities, such as lithium carbonate and lithium hydroxide, are produced when lithium ions moved to the surface of the nickel-based active material are reacted with moisture or carbon dioxide in the air and then adsorbed onto the surface of the nickel-based active material. Additionally, a stable crystal structure may be maintained even during charging/discharging, thereby preventing in advance a rapid decrease in capacity due to a change in a crystal structure.

The lanthanide element may be lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or a combination thereof, and for example, may be Ce.

A positive electrode active material according to an embodiment may be a compound represented by Formula 1:

$$[\text{Formula 1}] \qquad Li_a(Ni_{1-w-x-y-z}M3_wCo_xM1_yM2_z)O_{2\pm\alpha1}$$

wherein, in Formula 1, M1 may include one or two elements selected from the group consisting of manganese (Mn) and aluminum (Al),

M2 may include at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr) and Al,

M3 may include at least one element selected from the group consisting of La, Ce, Pr, Nd, Pm, Sm, Eu, Gd, Tb, Dy, Ho, Er, Tm, Yb, and Lu,

and $0.95 \leq a \leq 1.1$, $0.6 \leq (1-x-y-z) < 1$, $0 < w \leq 0.05$, $0 \leq x \leq 0.4$, $0 \leq y \leq 0.4$, $0 \leq z \leq 0.4$, and $0 \leq \alpha1 \leq 0.1$.

In the nickel-based active material containing 60 mol% or more of nickel, the amount of nickel may be 60 mol% to 95 mol% or 60 mol% to 85 mol%. A lithium secondary battery having high capacity characteristics may be manufactured by using the nickel-based active material.

An amount of the lanthanide element in the positive electrode active material may be 0.1 mol% to 5 mol% or 0.2 mol% to 1 mol%. In the positive electrode active material, the lanthanide element serves to helping single crystallization while controlling a particle size of the positive electrode active material. When the amount of the lanthanide element falls within the above-mentioned range, a lithium secondary battery using the positive electrode active material may have improved rate performance and lifetime characteristics.

A full width at half maximum (FWHM) of a peak corresponding to a (003) plane obtained by X-ray diffraction analysis for the positive electrode active material may be 0.1030° to 0.1052° and a ratio (FWHM (003) / FWHM (104)) of the FWHM of the peak corresponding to a (003) plane to the FWHM of the peak corresponding to a (104) plane may be 1.22 to 1.26. In addition, no $CeO_2$ related peak is observed in a region in which 2$\theta$ is 28° by a X-ray diffraction analysis for the positive electrode active material. Herein, in a region in which 2$\theta$ is 27° to 29°, for example, 28°, a $CeO_2$ related peak may be observed when cerium oxide is externally coated on a surface of the nickel-based active material. It can be found that as described above, $CeO_2$-related peaks are not observed and therefore the positive electrode active material according to an embodiment does not have a form of a surface-coated composite containing the lanthanide element such as cerium oxide, but has a doped structure in which Ce is contained inside the large crystal particle.

A method for preparing the positive electrode according to an embodiment is as follows.

The positive electrode active material may be prepared, for example, by two preparing methods. A first preparing method is carried out in the following way.

A nickel-based active material precursor, a lithium precursor, and a lanthanide element precursor are mixed to obtain a first mixture. In the first mixture, an amount of the nickel-based active material precursor and an amount of the lithium precursor may be controlled stoichiometrically such that a mixing molar ratio of lithium to metals other than lithium may be controlled to be in a range of 0.8 to 1.

The mixing may be performed using a mechanical milling method such as a ball milling or jet milling.

Subsequently, the first mixture may be subjected to a first heat treatment in an oxidizing gas atmosphere at 800 °C to 950 °C, for example at 900 °C to 950 °C, to obtain a nickel-based active material.

Next, a lithium precursor is added to the heat-treated product, and a second heat treatment is performed at 700 °C to 800 °C, for example 720 °C to 780 °C while controlling such that a mixing molar ratio of lithium to metals other than lithium becomes to be in a range of 0.95 to 1.05.

An amount of the lithium precursor may be controlled so that a mixing molar ratio of lithium to metals other than lithium may be in a range of 0.95 to 1.05, or 0.99 to 1.03. The second heat treatment may be performed at a lower temperature than the first heat treatment. When the first heat treatment and the second heat treatment are performed under the above-described conditions, a single crystal positive electrode active material for a lithium secondary battery having improved lifetime characteristics may be prepared.

Amounts of the above-described nickel-based active material precursor and the lanthanide element precursor may be controlled stoichiometrically in order to obtain a desired positive electrode active material.

The heat treatment may be performed in an oxidizing gas atmosphere. The oxidizing gas atmosphere may be, for example, an air atmosphere, or an oxygen atmosphere. The oxygen atmosphere may include 90 % by volume or more of oxygen, and the rest may be an inert gas. Herein, the inert gas may be nitrogen, helium, argon, or a combination thereof. The oxidizing gas may be composed of 10 % by volume to 20% by volume of oxygen or air and 80 % by volume to 90 % by volume of the inert gas.

The lanthanide element precursor may be a compound containing a lanthanide element, and may use nitrate, oxide, sulfate, chloride, etc., containing at least one element selected from among La, Ce, Pr, Nd, Pm, Sm, Eu, Gd, Tb, Dy, Ho, Er, Tm, Yb, and Lu. The lanthanide element precursor may include, for example, cerium oxide, cerium nitrate, cerium sulfate, etc.

The nickel-based active material precursor is a compound represented by, for example, Formula 5.

[Formula 5] $\qquad$ $Ni_{1-x-y-z}Co_xM1_yM2_z(OH)_2$

wherein, in Formula 5, M1 may be one element or two elements selected from the group consisting of Mn and Al, M2 may be an element selected from the group consisting of B, Mg, Ca, Sr, Ba, Ti, V, Cr, Fe, Cu, Zr, and Al, and $0.6 \leq (1-x-y-z) < 1$, $0 \leq x \leq 0.4$, $0 \leq y \leq 0.4$, and $0 \leq z \leq 0.4$.

In Formula 5, $0 \leq z \leq 0.05$ and $0.6 \leq (1-x-y-z) \leq 0.95$. In Formula 5, x may be 0.1 to 0.3, y may be 0.05 to 0.3, and z may be 0.

Next, a second method of preparing a positive electrode active material will be described.

A positive electrode active material may be prepared by: mixing a nickel-based active material precursor containing a lanthanide element, and a lithium precursor and performing a first heat treatment while controlling a mixing molar ratio of lithium to metals other than lithium to be in a range of 0.8 to 1; and adding a lithium precursor to the heat-treated product and performing a second heat treatment while controlling a mixing molar ratio of lithium to metals other than lithium to be in a range of 0.95 to 1.05.

The nickel-based active material precursor containing a lanthanide element may be obtained, for example, by reacting a cobalt precursor, a manganese precursor, a nickel precursor, and a lanthanide element precursor.

The nickel-based active precursor containing a lanthanide element is a compound represented by, for example, Formula 5-1.

[Formula 5-1] $\qquad$ $Ni_{1-w-x-y-z}M3_wCO_xM1_yM2_z(OH)_2$

wherein, in Formula 5-1, M1 may be one element or two elements selected from the group consisting of Mn and Al, M2 may be an element selected from the group consisting of B, Mg, Ca, Sr, Ba, Ti, V, Cr, Fe, Cu, Zr, and Al, M3 may be at least one element selected from the group consisting of La, Ce, Pr, Nd, Pm, Sm, Eu, Gd, Tb, Dy, Ho, Er, Tm, Yb, and Lu, and $0.6 \leq (1-w-x-y-z) < 1$, $0 < w \leq 0.05$, $0 \leq x \leq 0.4$, $0 \leq y \leq 0.4$, and $0 \leq z \leq 0.4$.

The positive electrode active material obtained by performing the preparing method has improved productivity through suppressing of aggregation of particles. In addition, a lithium battery having improved lifetime characteristics may be manufactured by providing a positive electrode active material in which oxygen desorption is suppressed from the surface without limitation such as deterioration in lifetime characteristics that occur when an alkali-based grain growth accelerator is used in a typical manufacturing single crystal positive electrode.

In the first positive electrode active material, the nickel-based active material precursor is a secondary particle in which primary particles are aggregated, and has a size 2 $\mu$m to 5 $\mu$m. Additionally, the nickel-based active material precursor may be, for example, a compound represented by Formula 5.

The nickel-based active material precursor of Formula 5 may be, for example, a compound represented by Formula 6, a compound represented by Formula 7, or a mixture thereof.

[Formula 6] $\quad Ni_{1-x1-y1-z1}Co_{x1}Mn_{y1}M_{z1}(OH)_2$

wherein, in Formula 6, M may be an element selected from the group consisting of B, Mg, Ca, Sr, Ba, Ti, V, Cr, Fe, Cu, and Zr,

and $0.6 \leq (1-x1-y1-z1) < 1$, $0 \leq x1 \leq 0.4$, $0 \leq y1 \leq 0.4$, and $0 \leq z1 \leq 0.4$.

[Formula 7] $\quad Ni_{1-x2-z2}Co_{x2}Al_{z2}(OH)_2$

wherein, in Formula 7, $0.6 \leq (1-x2-z2) < 1$, $0 \leq x2 \leq 0.4$, and $0 < z2 \leq 0.4$.

The nickel-based active material precursor may be, for example, $Ni_{0.91}CO_{0.06}Mn_{0.03}(OH)_2$, $Ni_{0.91}Co_{0.06}Al_{0.03}(OH)_2$, $Ni_{0.92}Co_{0.05}Al_{0.03}(OH)_2$, $Ni_{0.94}Co_{0.03}Al_{0.03}(OH)_2$, $Ni_{0.88}Co_{0.06}Al_{0.06}(OH)_2$, $Ni_{0.96}Co_{0.02}Al_{0.02}(OH)_2$, $Ni_{0.93}Co_{0.04}Al_{0.03}(OH)_2$, $Ni_{0.8}Co_{0.15}Al_{0.05}O_2(OH)_2$, $Ni_{0.75}Co_{0.20}Al_{0.05}(OH)_2$, $Ni_{0.92}Co_{0.05}Mn_{0.03}(OH)_2$, $Ni_{0.94}Co_{0.03}Mn_{0.03}(OH)_2$, $Ni_{0.88}Co_{0.06}Mn_{0.06}(OH)_2$, $Ni_{0.96}Co_{0.02}Mn_{0.02}(OH)_2$, $Ni_{0.93}Co_{0.04}Mn_{0.03}(OH)_2$, $Ni_{0.8}Co_{0.15}Mn_{0.05}O_2(OH)_2$, $Ni_{0.75}Co_{0.2}Mn_{0.05}(OH)_2$, $Ni_{0.6}Co_{0.2}Mn_{0.2}(OH)_2$, $Ni_{0.7}Co_{0.15}Mn_{0.15}(OH)_2$, $Ni_{0.7}Co_{0.01}Mn_{0.2}(OH)_2$, $Ni_{0.8}Co_{0.1}Mn_{0.1}(OH)_2$, or $Ni_{0.85}Co_{0.1}Al_{0.05}(OH)_2$.

The nickel-based active material precursor may be prepared through a co-precipitation reaction of a mixture containing a metal raw material such as a nickel precursor, a cobalt precursor, a manganese precursor, and a precursor of other transition metals, a complexing agent, and a pH adjusting agent.

As the metal raw material, a metal precursor may be used in consideration of a composition of the nickel-based active material precursor. Examples of a metal raw material include metal carbonate, metal sulfate, metal nitrate, metal chloride, etc. However, the metal raw material is not limited thereto, and any metal precursor available in the art may be used.

Nickel sulfate, nickel chloride, nickel nitrate, and the like are used as the nickel precursor. Additionally, cobalt sulfate, cobalt chloride, cobalt nitrate, and the like are used as the cobalt precursor, and manganese sulfate, manganese chloride, manganese nitrate, and the like are used as the manganese precursor.

An amount of each metal raw material is controlled stoichiometrically to obtain a desired nickel-based active material precursor.

The pH adjusting agent serves to lower a solubility of metal ions in a reactor to cause the metal ions to be precipitated as hydroxides. The pH adjusting agent is, for example, ammonium hydroxide, sodium hydroxide (NaOH), and sodium carbonate ($Na_2CO_3$), etc. The pH adjusting agent is, for example, sodium hydroxide (NaOH).

The complexing agent serves to control a reaction rate of formation of precipitates in the co-precipitation reaction. The complexing agent is ammonium hydroxide ($NH_4OH$) (ammonia water), citric acid, acrylic acid, tartaric acid, glycolic acid, etc. The complexing agent is used in a conventionally used amount. The complexing agent is, for example, ammonia water.

By washing a product obtained by the co-precipitation reaction and then drying the product, a desired nickel-based active material precursor for a lithium secondary battery may be obtained. Herein, drying is carried out under typical conditions.

In the second method of preparing a positive electrode active material, a nickel-based active material precursor containing a lanthanide element may be prepared in the same manner as the above-described method of preparing a nickel-based active material precursor, except that a lanthanide element precursor is further added to a mixture containing a metal raw material such as a nickel precursor, a cobalt precursor, a manganese precursor, and other transition metals precursor, a complexing agent, and a pH adjusting agent.

A lithium secondary battery according to another embodiment includes the positive electrode including the above-described positive electrode active material, a negative electrode, and an electrolyte disposed therebetween.

A lithium secondary battery having improved capacity characteristics, charging/discharging efficiency, and lifetime may be obtained using the method of preparing the positive electrode active material according to an embodiment.

An amount of residual lithium in the nickel-based active material according to an embodiment is less than 900 ppm.

Hereinafter, the method of manufacturing a lithium secondary battery having the positive electrode including the positive electrode active material according to an embodiment, a negative electrode, a lithium salt-containing non-aqueous electrolyte, and a separator will be described.

The positive electrode and the negative electrode may be respectively manufactured by applying a positive electrode active material-forming composition and a negative electrode active material-forming composition and drying the compositions to form a positive electrode active material layer and a negative electrode active material layer.

The positive electrode active material-forming composition may be prepared by mixing a positive electrode active material, a conductive material, a binder, and a solvent, and the nickel-based active material according to an embodiment may be used as the positive electrode active material.

The positive electrode binder serves to improve bonding of particles of the positive electrode active material and adhesion between the positive electrode active material and the positive electrode current collector. Particular examples of the positive electrode binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluoro rubber, various copolymers thereof, and the like. Among these, one may be used alone or a mixture of two or more may be used.

The conductive material is not particularly limited as long as having conductivity without causing a chemical change in the battery, and examples thereof may include graphite such as natural graphite or artificial graphite; carbon-based materials such as carbon black, acetylene black, ketjen black, channel black, furnace black, lamp black, and summer black; conductive fibers such as a carbon nanotube, a carbon fiber, and a metal fiber; fluorinated carbon; metal powders such as aluminum powder and nickel powder; conductive whiskeys zinc oxide and potassium titanate; conductive metal oxides such as titanium oxide; and conductive materials such as polyphenylene derivatives.

An amount of the conductive material may be 1 part by weight to 10 parts by weight or 1 part by weight to 5 parts by weight with respect to 100 parts by weight of the positive electrode active material. When the amount of the conductive material falls within the range, finally obtained electrode may have excellent conductivity characteristics.

As a non-limiting example of the solvent, N-methyl pyrrolidone and the like may be used, and an amount of the solvent may be 20 parts by weight to 200 parts by weight with respect to 100 parts by weight of the positive electrode active material. When the amount of the solvent falls within the above-mentioned range, an operation for forming the positive electrode active material layer becomes easy.

The positive electrode current collector may have a thickness of 3 $\mu$m to 500 $\mu$m, and a material thereof is not particularly limited as long as having high conductivity without causing a chemical change in the battery. Examples of the positive electrode current collector may include stainless steel, aluminum, nickel, titanium, heat-treated carbon, or aluminum or stainless-steel surface-treated with carbon, nickel, titanium, silver, etc. The current collector may have fine irregularities on the surface thereof to increase the adhesion of the positive electrode active material, and may have various forms such as films, foils, nets, porous bodies, foams, non-woven fabrics.

Apart from this, a negative-electrode active material layer-forming composition may be prepared by mixing a negative electrode active material, a binder, and a solvent.

As the negative electrode active material, a material capable of reversibly intercalating/deintercalating lithium ions, lithium metal, a lithium metal alloy, a material capable of doping and undoping lithium, a transition metal oxide, or a combination thereof may be used.

Examples of the material capable of reversibly intercalating/deintercalating the lithium ions may include a carbon material, that is, a carbonaceous negative electrode active material generally used in a lithium secondary battery. Representative examples of the carbonaceous negative electrode active material may include crystalline carbon, amorphous carbon, or both thereof. Examples of the crystalline carbon may include graphite such as natural graphite, or artificial graphite, which is non-shaped plate-like, flake-like, spherical, or fibrous form, and examples of the amorphous carbon may include soft carbon or hard carbon, mesophase pitch carbide, calcined coke, etc.

The lithium metal alloy may be an alloy of lithium and a metal selected from the group consisting of sodium (Na), potassium (K), rubidium (Rb), cesium (Cs), francium (Fr), beryllium (Be), Mg, Ca, Sr, silicon (Si), antimony (Sb), lead (Pb), indium (In), zinc (Zn), Ba, radium (Ra), germanium (Ge), Al, and tin (Sn).

The material capable of doping and undoping lithium may be a silicon-based material, for example, Si, SiO$_x$ (0 < x < 2), Si-Q alloy (the Q is an element selected from the group consisting of alkali metals, alkaline earth metals, group 13 elements, a group 14 elements, group 15 elements, group 16 elements, transition metals, rare earth elements, and a combination thereof, but excludes Si), Si-carbon composites, Sn, SnO$_2$, Sn-R (the R is an element selected from the group consisting of alkali metals, alkaline earth metals, group 13 elements, group 14 elements, group 15 elements, group 16 elements, transition metals, rare earth elements, and a combination thereof, but excludes Sn.), Sn-carbon composites, etc., and also use a mixture of at least one thereof and SiO$_2$. The element Q and element R may be selected from the group consisting of Mg, Ca, Sr, Ba, Ra, scandium (Sc), yttrium (Y), Ti, Zr, hafnium (Hf), rutherfordium (Rf), V, niobium (Nb), tantalum (Ta), dubnium (Db), Cr, molybdenum (Mo), tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, phosphorus (P), arsenic (As), Sb, bismuth (Bi), sulfur (S), selenium (Se), tellurium (Te), polonium (Po), and a combination thereof.

A lithium titanium oxide may be used as the transition metal oxide.

Non-limiting examples of the negative electrode binder may include various types of binder polymers, for example, polyvinylidene fluoride-hexafluoropropylene copolymer (PVDF-co-HFP), polyvinylidenefluoride, polyacrylonitrile, polymethylmethacrylate, polyvinyl alcohol, Carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM) rubber, sulfonated EPDM, styrene butadiene rubber (SBR), fluoro rubber, polyacrylic acid, polymers in which hydrogen is substituted with Li, Na or Ca, or various copolymers.

The negative electrode active material layer may further include a conductive material. The conductive material is not particularly limited as long as having conductivity without causing a chemical change in the battery. For example, graphite such as natural graphite or artificial graphite; carbonaceous materials such as carbon black, acetylene black, ketjen black, channel black, furnace black, lamp black, and summer black.; conductive fibers such as a carbon fiber or a metal fiber; a conductive tube such as a carbon nanotube; fluorocarbon; metal powders such as aluminum powder and nickel powder; conductive whiskeys such as zinc oxide and potassium titanate; conductive metal oxides such as titanium oxide; conductive materials such as polyphenylene derivatives, may be used. The conductive material may preferably be carbon black, and more specifically may be carbon black having an average particle diameter of several tens of nanometers.

The conductive material may be 0.01 parts by weight to 10 parts by weight, 0.01 parts by weight to 5 parts by weight, or 0.1 by weight to 2 by weight with respect to 100 parts by weight of the negative electrode active material layer.

The negative electrode active material layer-forming composition may further include a thickening agent. As the thickening agent, at least any one among carboxymethyl cellulose (CMC), carboxyethyl cellulose, starch, regenerated cellulose, ethyl cellulose, hydroxymethyl cellulose, hydroxyethyl cellulose, hydroxypropyl cellulose, and polyvinyl alcohol may be used, and for example, CMC may be used.

An amount of the solvent may be 100 parts by weight to 300 parts by weight with respect to 100 parts by weight of the negative electrode active material. When the amount of the solvent falls within the above range, an operation for forming the negative electrode active material layer becomes easy.

The negative electrode current collector has a thickness of 3 $\mu$m to 500 $\mu$m in general. A material of the negative electrode current collector is not particularly limited as long as having conductivity without causing a chemical change in the battery. Examples of the negative electrode current collector may include copper, stainless steel, aluminum, nickel, titanium, heat-treated carbon, surface-treated copper, or stainless steel with carbon, nickel, titanium, silver, etc., and aluminum-cadmium alloy, etc. In addition, as similar to the positive electrode current collector, adhesion of the negative electrode active material may be enhanced by forming fine irregularities on the surface of the negative electrode current collector, and the negative electrode current collector may have various forms such as films, foils, nets, porous bodies, foams, non-woven fabrics.

A separator is disposed between the positive electrode and the negative electrode, manufactured by the above-described process.

The separator may have a pore diameter of 0.01 $\mu$m to 10 $\mu$m and a thickness of 5 $\mu$m to 30 $\mu$m. For specific example, olefin polymers such as polypropylene, polyethylene; or a sheet or non-woven fabric made of glass fibers is used. When a solid electrolyte such as a polymer is used as an electrolyte, the solid electrolyte may also serve as a separator.

The lithium salt-containing non-aqueous electrolyte is composed of a non-aqueous electrolyte solution, and a lithium salt. As a non-aqueous electrolyte, a non-aqueous electrolyte solution, an organic solid electrolyte, and inorganic solid electrolyte may be used.

Non-limiting examples of the non-aqueous electrolyte solution may include an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxyethane, 2-methyl tetrahydrofuran, dimethylsulfoxide Seed, 1,3-dioxolane, N, N-formamide, N, N-dimethylformamide, dioxolane, acetonitrile, nitromethane, methyl formate, methyl acetate, phosphoric acid triester, trimethoxy methane, Dioxolane derivatives, sulfolane, methyl sulfolane, 1,3-dimethyl-2-imidazolidinone, propylene carbonate derivatives, tetrahydrofuran derivatives, ether, methyl propionate, ethyl propionate.

Non-limiting examples of the organic solid electrolyte may include polyethylene derivatives, polyethylene oxide derivatives, polypropylene oxide derivatives, phosphoric acid ester polymers, polyester sulfides, polyvinyl alcohol, polyvinylidene fluoride, etc.

Non-limiting examples of the inorganic solid electrolyte may include Li nitride such as $Li_3N$, Lil, $Li_5NI_2$, $Li_3N$-Lil-LiOH, $LiSiO_4$, $Li_2SiS_3$, $Li_4SiO_4$, $Li_4SiO_4$-Lil-LiOH, $Li_3PO_4$-$Li_2S$-$SiS_2$, Li halide, Li sulfate.

The lithium salt is an easily soluble material in the non-aqueous electrolyte, and non-limiting examples of the lithium salt may include $LiCl$, $LiBr$, $Lil$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, $(FSO_2)_2NLi$, lithium chloroborate, lower aliphatic lithium carboxylate, tetra phenyl borate lithium imide, etc.

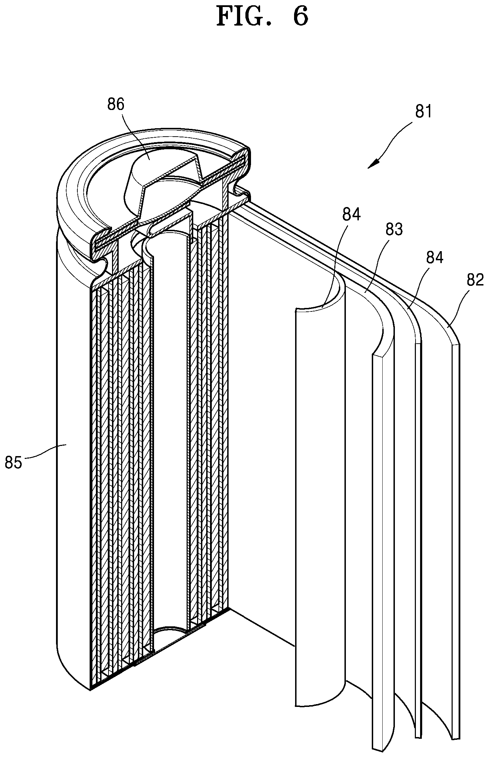

FIG. 6 is a cross-sectional view illustrating schematically a representative structure of a lithium secondary battery according to an embodiment.

Referring to FIG. 6, a lithium secondary battery 81 includes a positive electrode 83, a negative electrode 82, and a separator 84. An electrode assembly in which the positive electrode 83, the negative electrode 82, and the separator 84 are wound or folded is accommodated in a battery case 85. An alternately stacked battery structure may be formed by disposing the separator between the positive electrode and the negative electrode according to a shape of the battery. Subsequently, the lithium secondary battery 81 is manufactured by injecting an organic electrolyte solution into the battery case 85 and being sealed with a cap assembly 86. The battery case 25 may be a cylindrical type, a prismatic type, a thin film type, and the like. For example, the lithium secondary battery 21 may be a large-sized thin film type battery. The lithium secondary battery may be a lithium-ion battery. After accommodating the battery structure in the pouch, the pouch is impregnated in the organic electrolyte solution and sealed to complete a manufacturing a lithium-ion polymer battery. Additionally, a plurality of the battery structure is stacked to form a battery pack, and such battery pack may be used in all devices requiring high capacity and high output. For example, the battery pack may be used for laptop computers, smartphones, electric vehicles, etc.

In addition, the lithium secondary battery has excellent storage stability at a high temperature, lifetime characteristics, and high-rate characteristics and thus may be used for electric vehicles (EV). For example, the lithium secondary battery may be used for hybrid vehicles such as plug-in hybrid electric vehicles (PHEVs).

The present disclosure will be described in more detail through Examples and Comparative Examples hereafter. However, Examples are provided to illustrate the present disclosure, and the scope of the present disclosure is not limited thereto.

(Preparing Nickel-based active material precursor)

Preparation Example 1

A nickel-based active material precursor ($Ni_{0.91}Co_{0.06}Mn_{0.03}(OH)_2$) was synthesized through a co-precipitation method.

pNickel sulfate ($NiSO_46H_2O$), cobalt sulfate ($CoSO_4.7H_2O$), and manganese sulfate ($MnSO_4.H_2O$) was dissolved to be in a mole ratio of Ni: Co: Mn = 91: 6: 3 in distilled water which is a solvent, to prepare a mixed solution. To form a complex compound, diluted ammonia water ($NH_4OH$) solution and sodium hydroxide (NaOH) as a precipitating agent were prepared. Thereafter, a mixed metal raw materials solution, ammonia water, and sodium hydroxide were introduced respectively into a reactor. The sodium hydroxide was added to maintain the pH within the reactor. Next, after carrying out a reaction for about 20 hours while stirring, an addition of a raw material solution was terminated.

After filtering a slurry solution in the reactor and washing with high-purity distilled water, the resultant slurry was dried for 24 hours in a hot air oven at 200 °C to thus obtain a nickel-based active material precursor ($Ni_{0.91}Co_{0.06}Mn_{0.03}(OH)_2$. The nickel-based active material precursor is a secondary particle, and the secondary particle had an average particle diameter of about 4 $\mu$m.

(Preparing positive electrode active material)

Example 1

A first mixture was obtained by adding lithium hydroxide and cerium oxide ($CeO_2$) to the nickel-based active material precursor ($Ni_{0.91}Co_{0.06}Mn_{0.03}(OH)_2$) of Preparation Example 1. A mixing molar ratio of lithium to transition metal is about 0.9 in the first mixture. Herein, an amount of lithium carbonate was controlled such that a mixing molar ratio of lithium to metals in the nickel-based active material precursor is 0.9. Herein, metals indicate nickel (Ni), cobalt (Co), and Mn. The first mixture was subjected to a first heat treatment at about 900 °C in an oxygen atmosphere.

A second mixture was obtained by adding lithium hydroxide to a product obtained by the first heat treatment, and a positive electrode active material ($LiNi_{0.908}Co_{0.06}Mn_{0.03}Ce_{0.002}O_2$) in a large crystal particle form was obtained by performing a second heat treatment for 12 hours at about 800 °C in an oxygen atmosphere. Herein, an amount of lithium carbonate in the second mixture was controlled such that a mixing molar ratio of lithium to metals is 1.0, wherein moles of metal represent total moles of Ni, Co, Mn, and Ce. Ce is contained in the large crystal particle of the positive electrode active material, and an amount of Ce is 0.2 mol%. The large crystal particle has an average particle diameter of about 3 $\mu$m, and the large crystal grains have a one-body particle

Examples 2 and 3

A positive electrode active material was obtained in the same manner as in Example 1, except that an amount of cerium oxide ($CeO_2$)was changed such that the amount of Ce in the positive electrode active material was 0.5 mol% and 1.0 mol%, respectively.

Examples 4 and 5

A positive electrode active material was obtained in the same manner as in Example 1, except that conditions of a preparing process were controlled such that large crystal particles have an average particle diameter of about 2 $\mu$m and about 5 $\mu$m, respectively.

Examples 6 and 7

A positive electrode active material was obtained in the same manner as in Example 1, except that the mixing ratio of lithium to metals was controlled to be 0.85 and 1.0, respectively, in the first mixture.

Examples 8 and 9

A positive electrode active material was obtained in the same manner as in Example 1, except that the mixing ratio of lithium to transition metals was controlled to be 0.95 and 1.05 respectively in the second mixture.

Example 10

Through a co-precipitation method, a nickel-based active material precursor containing cerium was synthesized.
Nickel sulfate ($NiSO_46H_2O$), cobalt sulfate ($CoSO_47H_2O$), and manganese sulfate ($MnSO_4H_2O$) were dissolved to be in a mole ratio of Ni:Co: Mn = 6: 2: 2 in distilled water, which is a solvent, to prepare a mixed solution. Cerium nitrate was added to the mixed solution, and a content of cerium nitrate was 0.2 mol%.
Diluted ammonia water ($NH_4OH$) solution and sodium hydroxide (NaOH) as a precipitating agent were prepared to form a complex compound. Thereafter, a mixed solution of metal raw materials, ammonia water, and sodium hydroxide were introduced into a reactor. The sodium hydroxide was added to maintain the pH within the reactor. Subsequently, after conducting a reaction for about 20 hours while stirring, adding a raw material solution was terminated.
A slurry solution in the reactor filtered and washed with high-purity distilled water, and then the resultant slurry was dried for 24 hours in a hot air oven at 200 °C to thus obtain a nickel-based active material precursor ($Ni_{0.89}Co_{0.06}Mno_{0.03}Ce_{0.02}(OH)_2$) containing cerium. The nickel-based active material precursor is a secondary particle and has an average particle diameter of about 4 $\mu$m.
Lithium hydroxide was added to the nickel-based active material precursor ($Ni_{0.89}Co_{0.06}Mn_{00.03}Ce_{0.02}(OH)_2$) containing the cerium to obtain a first mixture. The mixing molar ratio of lithium to transition metals is about 0.9 in the first mixture. Herein, an amount of lithium hydroxide was controlled such that a mixing molar ratio of lithium to metals of the nickel-based active material containing cerium was 0.9, and an amount of metals was total amounts of Ni, Co, and Mn. The first mixture was subjected to a first heat treatment at 900 °C in an oxygen atmosphere.
Lithium hydroxide was added to a product obtained by the first heat treatment to obtain a second mixture, and the second mixture was subjected to a second heat treatment for 12 hours at 850 °C under an oxygen atmosphere to prepare a positive electrode active material ($LiNi_{0.89}Co_{0.06}Mn_{0.03}Ce_{0.02}O_2$). An amount of lithium hydroxide in the second mixture was controlled such that a mixing molar ratio of lithium to metals (a molar ratio of Li/Metals) was 1.0.

Comparative Example 1

A positive electrode active material was obtained in the same manner as in Example 1, except that $CeO_2$ was not added when preparing a first mixture.
In case of carrying out the preparing according to Comparative Example 1, a positive electrode active material in a large crystal particle form was difficult to obtain.

Comparative Example 2

When preparing a first mixture, cerium oxide was not added, lithium hydroxide and cerium oxide ($CeO_2$) were added to a product obtained by a first heat treatment to obtain a second mixture, and then a positive electrode active material coated with cerium was obtained in the same manner as Example 1.

Manufacturing Example 1: Manufacture of Coin Cell

A coin cell was manufactured as follows by using a positive electrode active material according to Example 1 as a positive electrode active material.

A uniformly dispersed positive electrode active material-forming slurry was prepared by removing bubbles using a mixer in a mixture of 96 g of the nickel-based active material ($LiNi_{0.6}Co_{0.2}Mn_{0.2}O_2$), 2 g of polyvinylidene fluoride, 47 g of N-methyl pyrrolidone which is a solvent, and 2 g of carbon black which is a conductive agent.

The slurry prepared according to the above process was applied using a doctor blade on an aluminum foil to manufacture a thin electrode plate, then dried for 3 hours or more at 135 °C, and thereafter subjected to rolling and drying processes to manufacture a positive electrode.

A 2032-type coin cell was manufactured using the positive electrode and a lithium metal counter electrode. The 2032-type coin cell was manufactured by disposing a separator (thickness: about 16 $\mu$m) made of porous polyethylene (PE) film between the positive electrode and the lithium metal counter electrode and introducing an electrolyte solution. The electrolytic solution is a solution containing 1.15 M of $LiPF_6$ dissolved in a solvent mixing ethylene carbonate (EC), ethyl methyl carbonate (EMC), and dimethyl carbonate (DMC) at a volume ratio of 20:40:40.

Manufacturing Examples 2 to 10: Manufacture of Coin Cell

A coin cell was manufactured in the same manner as in Manufacturing Example 1, except for using the positive electrode active materials of Examples 2 to 10, respectively, in place of the positive electrode active material of Example 1.

Comparative Manufacturing Example 1: Manufacture Coin Cell

A lithium secondary battery was manufactured in the same manner as Manufacturing Example 1, except for using the positive electrode active material manufactured according to Comparative Example 1, in place of the positive electrode active material manufactured according to Example 1.

Comparative Manufacturing Example 2: Manufacture Coin Cell

A lithium secondary battery was manufactured in the same manner as Manufacturing Example 1, except for using the positive electrode active material manufactured according to Preparation Example 1, in place of the positive electrode active material manufactured according to Example 1.

Evaluation Example 1: Scanning Electron Microscope

(1) Examples 1 to 3 and Preparation Example 1

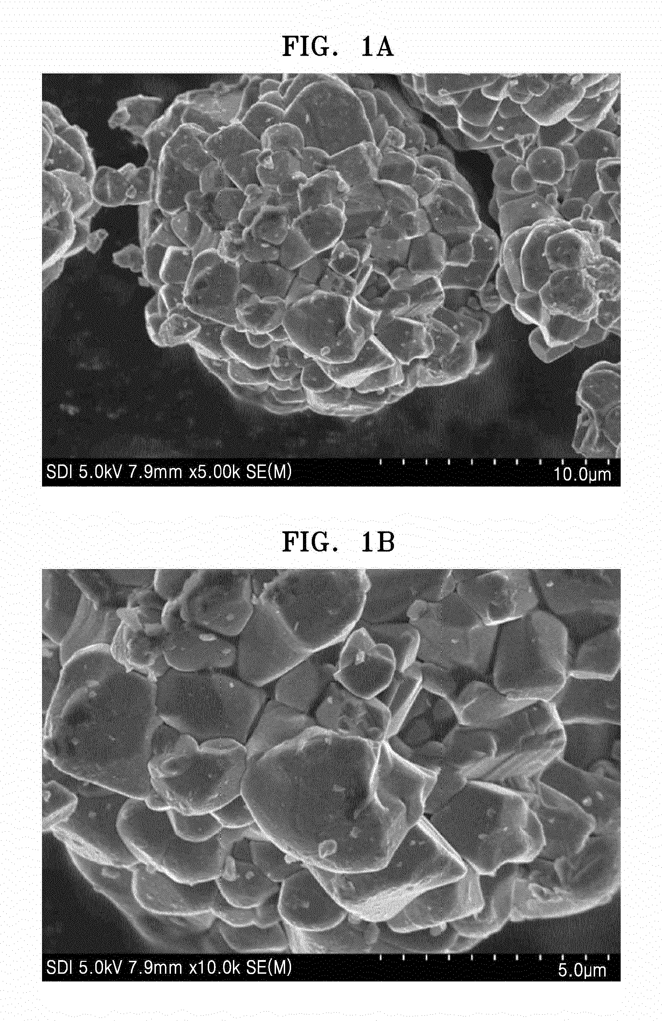

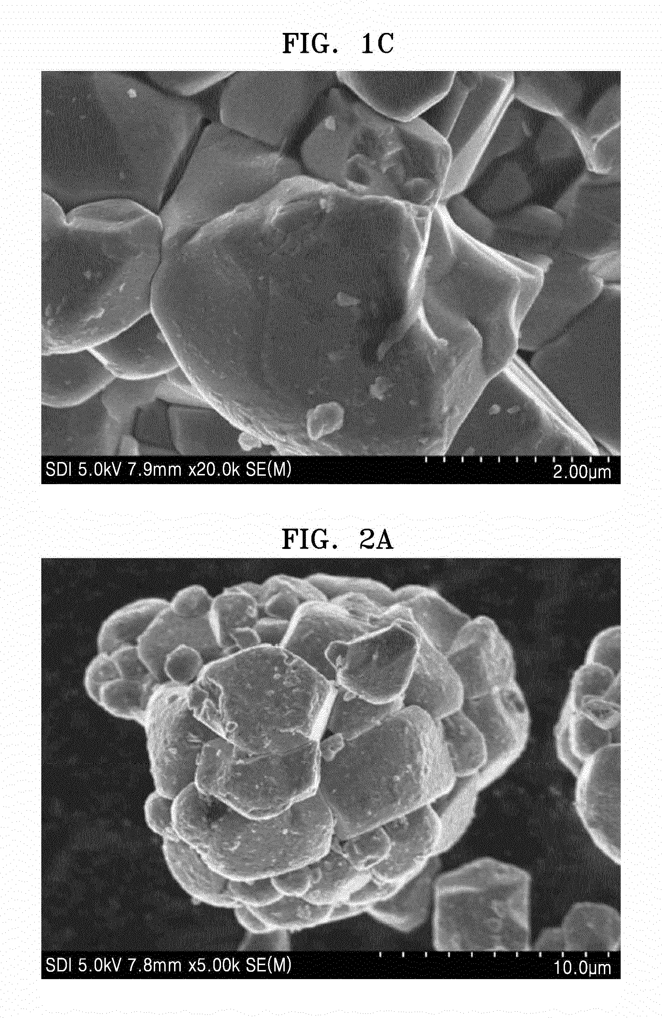

Scanning Electron microscope analysis was performed for the nickel-based active material precursor manufactured according to Preparation Example 1 and the positive electrode active material manufactured according to Examples 1 to 3. The scanning Electron microscope was Magellan 400 L (made by FEI company) and the results of the analysis were shown in FIGS. 1A to 1C, FIGS. 2A to 2C, 3A to 3C, and 4A to 4C. Herein, the nickel-based active material precursor and the positive electrode active materials were in a state prior to pulverization in a jet mill.

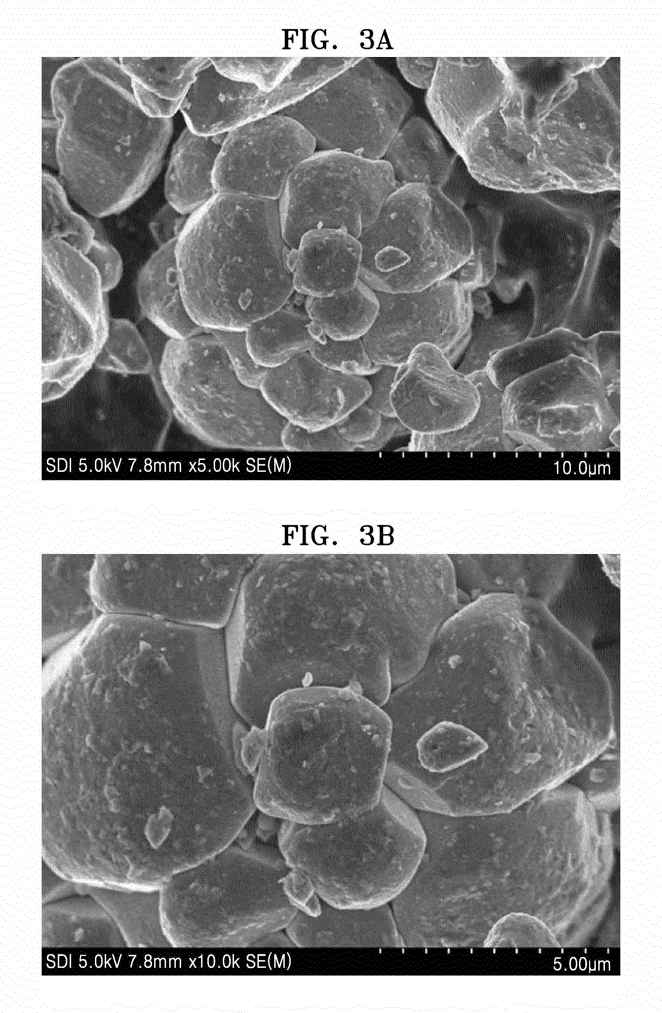

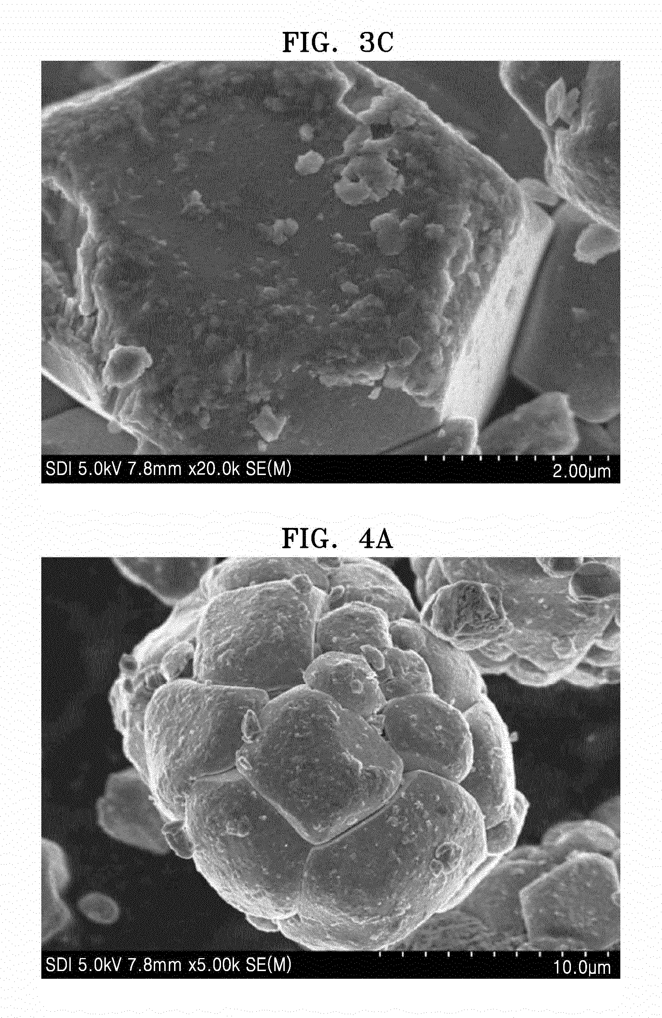

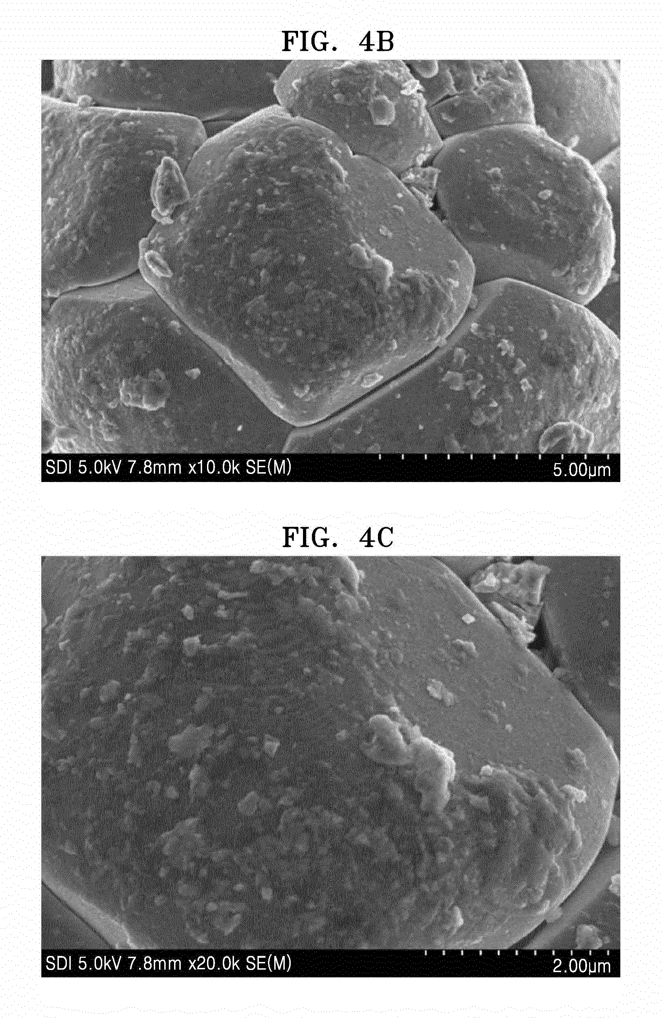

FIGS. 1A to 1C are SEM images of the nickel-based active material precursor obtained according to Preparation Example 1, FIGS. 2A to 2C are SEM images of the positive electrode active material obtained according to Example 1, FIGS. 3A to 3C are SEM images of the positive electrode active material obtained according to Example 2, and FIGS. 4A to 4C are SEM images of the positive electrode active material obtained according to Example 3.

Referring to these, particle growth of the nickel-based active material precursor of Preparation Example 1 and the positive electrode active material of Examples 1 to 3 may be observed. It can be found that the nickel-based active material precursor of Preparation Example 1, is, as shown in FIGS. 1A to 1C, a large crystal particle (single crystal) having an average particle diameter of 3 $\mu$m, and the positive electrode active material of Example 1 has, as shown in FIGS. 2A to 2C, a large crystal (single crystal) particle form having an average particle diameter of 3.2 $\mu$m. In addition, it can be confirmed that the positive electrode active material of Example 2, as shown in FIGS 3A to 3C, has a large crystal particle (single crystal) form having an average particle diameter of 3.3 $\mu$m, and the positive electrode active material of Example 3, as shown in FIGS 4A to 4C, has a large crystal particle form having an average particle diameter of 3.5 $\mu$m.

Examples 1 and 2 and Comparative Example 1

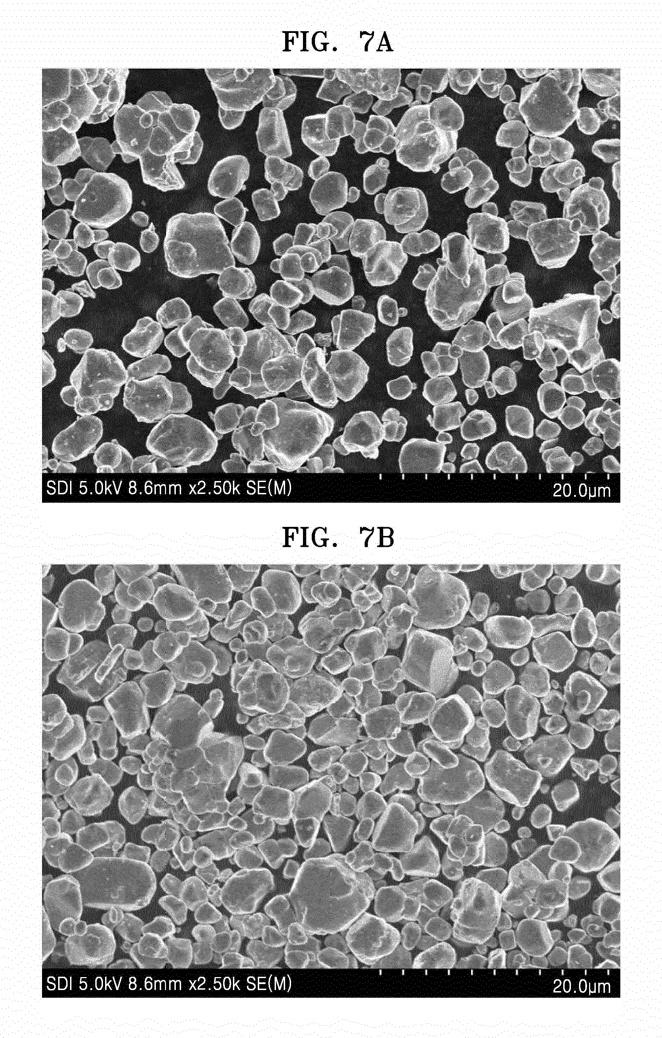

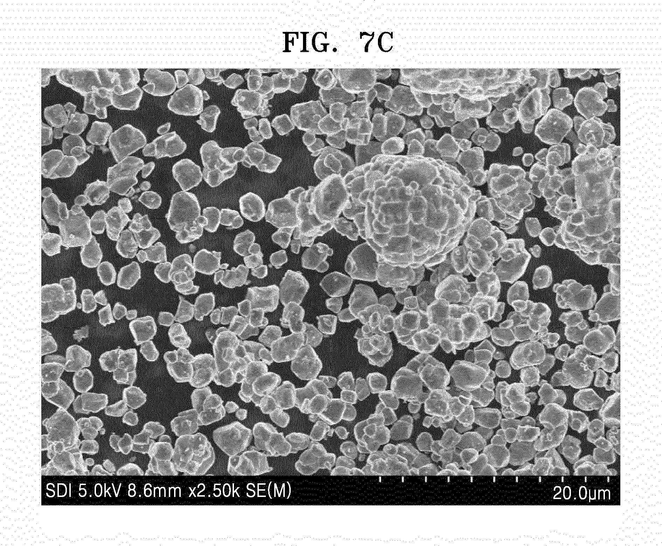

The scanning electron microscope analysis was performed for the positive electrode active material obtained according to Examples 1 and 2, and Comparative Example 1, and the results are shown in FIGS. 7A, 7B, and 7C, respectively. Herein, the positive electrode active material was in a pulverized state in a jet mill.

As shown in FIG. 7c, there are non-single crystal particles in the case of Comparative Example 1, but both of the positive electrode active materials of Example 1 (FIG. 7A) and Example 2 (FIG. 7B), were synthesized in a single crystal form, and polycrystal particles were not observed.

Evaluation Example 2: X-ray Diffraction Analysis

(1) Examples 1 and 2 and Preparation Example 1

X-ray diffraction analysis was performed using X'pert pro (made by PANalytical) with CuK$\alpha$ radiation (1.54056Å) on the positive electrode active materials prepared according to Examples 1 and 2 and Preparation Example 1. The results of the X-ray diffraction analysis were investigated and listed in Table 1 below.

FWHM (003) shows FWHM of a peak (the peak with 2$\theta$ of about 18°) corresponding to (003) plane, FWHM (104) shows FWHM of a peak (the peak with 2$\theta$ of about 43°) corresponding (104) plane. Area (003/104) shows a ratio of an area of the peak (the peak with 2$\theta$ of about 18°) corresponding to (003) plane to the peak (the peak with 2$\theta$ of about 43°) corresponding to (104) plane.

The peak corresponding to the (003) plane gives information about a layered structure of a positive electrode active material, and the peak corresponding to the (104) plane gives information about crystallinity.

Table 1

| Classification | FWHM (003)(°) | FWHM(003)/FWHM(104)(°) |
|---|---|---|
| Example 1 | 0.1052 | 1.22 |
| Example 2 | 0.1035 | 1.26 |
| Comparative Example 1 | 0.1053 | 1.21 |

Referring to Table 1, it could be seen that the positive electrode active materials of Examples 1 and 2 have a reduced FWHM and improved crystallinity than that of Comparative Example 1.

(2) Examples 1 and Comparative Examples 1 and 2

An X-ray diffraction analysis was performed using X'pert pro (made by PANalytical) with CuK$\alpha$ radiation (1.54056 Å).

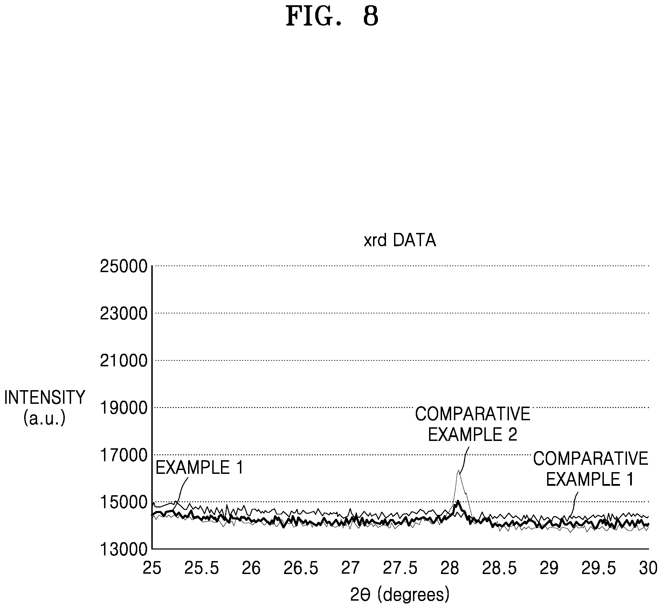

on the positive electrode active materials of Examples 1 and the positive active electrode active material manufactured according to Comparative Examples 1 and 2. The results of the X-ray diffraction analysis were investigated and shown in FIG. 8 below.

Referring to this, a $CeO_2$-related peak was observed at around 28° in the positive electrode active material coated with cerium according to Comparative Example 2, but no above-described peak is observed in the positive electrode active material of Example 1 and Comparative Example 1. From this, it could be seen that the positive electrode active material of Example 1 has a distinct structure from that of a coated case such as the positive electrode active material of Comparative Example 2. As a result of such analysis, it could be confirmed that the positive electrode active material of Example 1 has a structure in which Ce enters an inside of a lattice to be present in a bonded state with oxygen.

Evaluation Example 3: Residual Lithium

Residual lithium of a positive electrode active material manufactured according to Examples 1 and 2, and a positive electrode active material Comparative Example 1 was investigated by performing a following method.

10 g of a positive electrode active material was put into a beaker containing 100 ml of distilled water, followed by stirring for 5 minutes at a speed of 200 rpm to dissolve lithium remaining on a surface. Thereafter, the positive electrode active material was removed from the remaining lithium solution using a filter having an average pore size of 0.5 $\mu$m to 5 $\mu$m.

An amount of lithium in the solution was measured by titrating lithium derivatives remaining on the surface from which the positive electrode active material was removed, with 1 N of HCl solution.

The amount of lithium in the dissolved solution was measured using an automatic titrator. A first inflection point (EP1) at which the pH rapidly changes at pH 7 to 9, and an endpoint (FP) at which the pH reaches 5 were measured, and the following equations 1 and 2 are used to calculate the content of $Li_2CO_3$ and the content of LiOH.

[Equation 1]

Content of $Li_2CO_3$ (%): (FP-EP1) X 0.1 X 0.001 X (Mw of $Li_2CO_3$ (73.89)/5) X 100

Content of LiOH (%): (2 X EP1-FP) X 0.1 X 0.001 X (Mw of LiOH (23.94)/5) X 100    [Equation 2]

A content of the lithium derivative remaining on the surface was measured by summing the calculated $Li_2CO_3$ content and LiOH content, the content of the lithium derivative remaining on the surface was converted to weight % with respect to the total weight of the positive electrode active material, and the results were listed in following Table 2.

Table 2

| Classification | $Li_2CO_3$ (wt%) | LiOH (wt%) | Free Li (ppm) |
|---|---|---|---|
| Example 1 | 0.410 | 0.671 | 2716 |
| Example 2 | 0.476 | 0.750 | 3070 |
| Comparative Example 1 | 0.439 | 1.247 | 4442 |

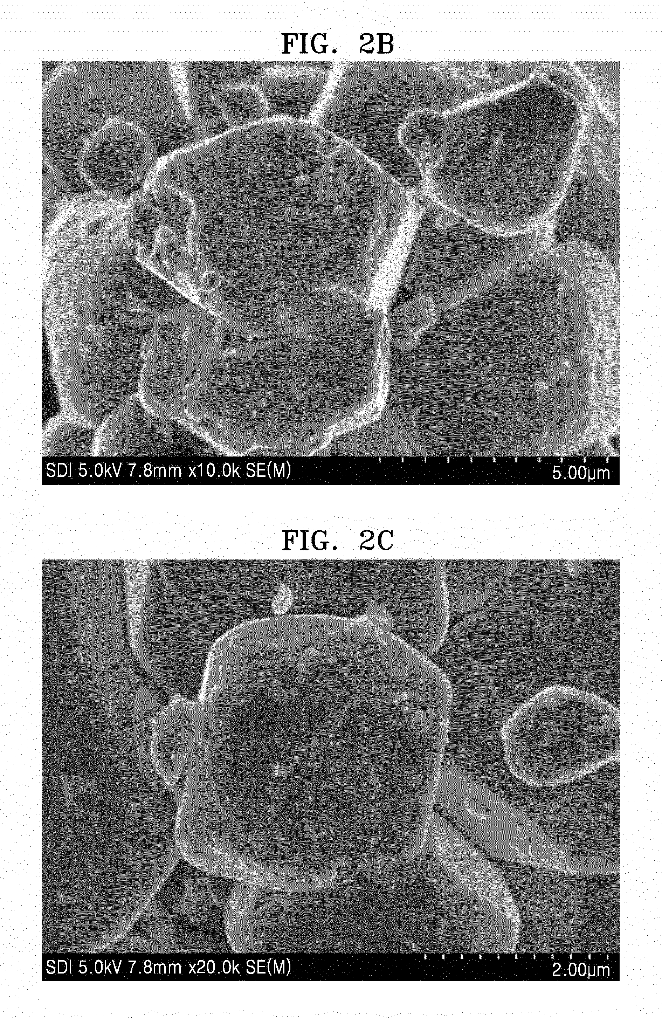

Referring FIG. 2, it could be seen that the positive electrode active material of Examples 1 and 2 has a reduced amount of total residual lithium compared to the positive electrode active material of Comparative Example 1.

Evaluation Example 4: Cycle characteristics

Charging and discharging characteristics and the like of the coin cells manufactured according to Manufacturing Examples 1 and 2 and Comparative Manufacturing Examples 1 and 2 were evaluated using a charge/discharge apparatus (TOYO-3100, made by TOYO SYSTEM Co., Ltd).

During a first charge/discharge cycle, a constant current charging was executed at 25 °C at a current rate of 0.2 C until the voltage reached 4.2 V, followed by a constant voltage charging until the current reached 0.05 C. Once the charging was completed, the cell rested for about 10 minutes, and then was subjected to constant current discharge at a current rate of 0.2 C until the voltage reached 3 V. In a second charge/discharge cycle, a constant current charging was executed at a current rate of 0.2 C until the voltage reached 4.2 V, and followed by a constant voltage charging was executed until the current reached 0.05 C. Once the charging was completed, the cell rested for about 10 minutes, and then was subjected to constant current discharge at a current rate of 0.2 C until the voltage reached 3 V.

Thereafter, a constant current charging was executed at a current rate of 1 C for 3 hours until the battery voltage reached 4.2 V. Subsequently, a constant current discharging was executed at a current rate of 1 C for 3 hours until the battery voltage reached 3 V. The described cycles were executed repeatedly up to a total of 50 cycles.

For lifetime evaluation, after constant current charging was executed until the voltage reached 4.2 V at a current rate of 1 C, constant voltage charging was executed until a current reached 0.05 C. Once the charging was completed, the cell rested for about 10 minutes. Thereafter, constant current discharge cycles at a current rate of 1 C until the voltage reached 3 V was executed repeatedly 50 times and then the lifetime characteristics of the charged cell were evaluated.

Charge/discharge efficiency was calculated from Equation 3 below, some of the charge/discharge efficiency were investigated and listed in Table 3 below, respectively.

Charge/Discharge Efficiency = [Average discharge voltage of first cycle / Average charge voltage of first cycle] X 100    [Equation 3]

Table 3

| Classification | Charge/Discharge Efficiency |
|---|---|
| Manufacturing Example 1 | 87 |
| Manufacturing Example 2 | 87 |
| Comparative Manufacturing Example 2 | 86 |

Referring to Table 3, it could be seen that coin cells manufactured according to Manufacturing Examples 1 and 2 have improved charge/discharge efficiency than that of Comparative Manufacturing Example 2. Additionally, a coin cell of Comparative Manufacturing Example 1, showed the same charge/discharge efficiency level as that of Comparative Manufacturing Example 2. In addition, charge/discharge efficiency for coin cells manufactured according to Manufacturing Examples 3 to 10 was evaluated in the same manner as a charge/discharge efficiency evaluation method for a coin cell of Manufacturing Example 1.

As a result of an evaluation, the coin cells manufactured according to Manufacturing Examples 3 to 10 showed the same charge/discharge efficiency level as compared to the coin cell of Manufacturing Example 1.

Evaluation Example 5: High Temperature Lifetime Characteristics

Charging and discharging characteristics of the coin cell manufactured according to Manufacturing Examples 1 and 2 and Comparative Manufacturing Example 2 were evaluated using a charge/discharge apparatus (TOYO-3100, made by TOYO SYSTEM Co., Ltd).

During a first charge/discharge cycle, a constant current charging was executed at 45 °C at a current rate of 0.1 C until the voltage reached 4.3 V, followed by a constant voltage charging until the current reached 0.05 C. Once the charging was completed, the cell rested for about 10 minutes, and then was subjected to constant current discharge at a current rate of 0.1 C until the voltage reached 3 V. In a second charge/discharge cycle, a constant current charging was executed at a current rate of 0.2 C until the voltage reached 4.3 V, and a constant voltage charging was executed until the current reached 0.05 C. Once the charging was completed, the cell rested for about 10 minutes, and then was subjected to constant current discharge at a current rate of 0.2 C until the voltage reached 3 V.

Thereafter, a constant current charging was executed at a current rate of 1 C for 3 hours until the battery voltage reached 4.3 V. Subsequently, a constant current discharging was executed at a current rate of 1 C for 3 hours until the battery voltage reached 2.5 V. The described cycles were executed repeatedly 50 times.

For lifetime evaluation, after constant current charging is executed until the voltage reached 4.2 V at a current rate of 1 C, constant voltage charging was executed until the current reached 0.05 C. Once the charging was completed, the cell rested for about 10 minutes. Thereafter, constant current discharge cycles at a current rate of 1 C until the voltage reached 3 V was executed repeatedly 50 times and then the lifetime characteristics of the charged cell was evaluated.

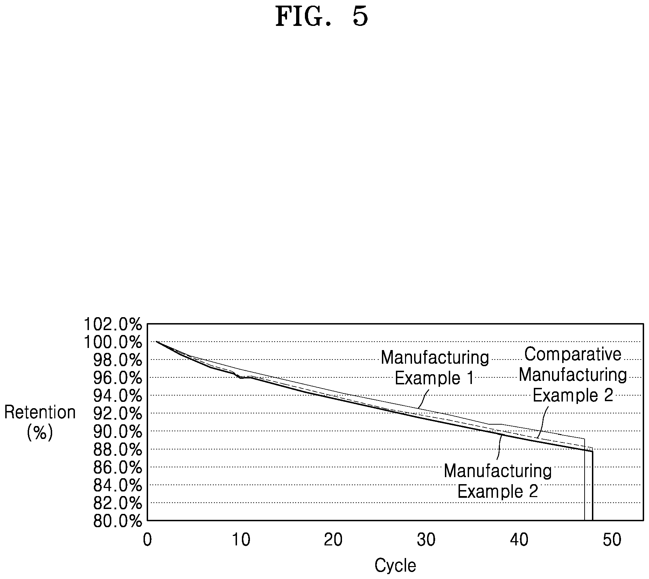

A capacity retention ratio (CRR) was calculated, and a result was shown in FIG. 5.

Referring to FIG. 5, it could be seen that coin cells manufactured according to Manufacturing Examples 1 and 2, have an excellent capacity retention rate as same as that of a coin cell of Comparative Manufacturing Example 2.

Hitherto, an embodiment has been described with reference to the figures and Examples, and it is understood that the present disclosure should not be limited to these embodiments, but various changes, modifications, and other equivalent embodiments can be made by one ordinary skilled in the art. Therefore, the scope of protection of the present disclosure should be defined by the following claims.

**Claims**

1. A positive electrode active material for a lithium secondary battery, comprising
   a nickel-based active material including nickel in an amount of 60 mol% or more,

   wherein the positive electrode active material includes a large crystal particle having a size of 1 $\mu$m to 10 $\mu$m, and a lanthanide element is contained inside the large crystal particle.

2. The positive electrode active material of claim 1, wherein the lanthanide element is cerium (Ce).

3. The positive electrode active material of claim 1, wherein the positive electrode active material is a compound represented by Formula 1:

[Formula 1] $\qquad Li_a(Ni_{1-w-x-y-z}M3_wCo_xM1_yM2_z)O_{2\pm\alpha1}$

wherein, in Formula 1, M1 is one element or two elements selected from the group consisting of manganese (Mn) and aluminum (Al),

M2 is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and Al,

M3 is at least one element selected from the group consisting of lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu),

and $0.95 \leq a \leq 1.1$, $0.6 \leq (1-x-y-z) < 1$, $0 < w \leq 0.05$, $0 \leq x \leq 0.4$, $0 \leq y \leq 0.4$, $0 \leq z \leq 0.4$, and $0 \leq \alpha1 \leq 0.1$.

4. The positive electrode active material of claim 1, wherein the large crystal particle is a one-body particle having a size of 1 $\mu$m to 10 $\mu$m, a secondary particle in which primary particles are aggregated, or a combination thereof, and the primary particles have a size of 1 $\mu$m to 10 $\mu$m.

5. The positive electrode active material of claim 4, wherein the secondary particle has a size of 5 $\mu$m to 30 $\mu$m.

6. The positive electrode active material of claim 1, wherein a full width at half maximum (FWHM) of a peak corresponding to a (003) plane, obtained by performing an X-ray diffraction analysis on the positive electrode active material, is 0.1030° to 0.1052°,

and a ratio (FWHM (003)/FWHM (104)) of the FWHM of the peak corresponding to the (003) plane to the FWHM of the peak corresponding to the (104) plane is 1.22 to 1.26.

7. The positive electrode active material of claim 1, wherein no $CeO_2$ related peak is observed in a region in which $2\theta$ is 27° to 29° by X-ray diffraction analysis for the positive electrode active material.

8. A lithium secondary battery comprising a positive electrode for a lithium secondary battery, the positive electrode including the positive electrode active material according to any one of claims 1 to 7.

9. A method of manufacturing a positive electrode active material for a lithium secondary battery, the method comprising: mixing a nickel-based active material precursor, a lithium precursor, and a lanthanide element precursor, and performing a first heat treatment while controlling a mixing molar ratio of lithium to metals other than lithium to be in a range of 0.8 to 1; and

adding a lithium precursor to the first heat-treated product, and performing a second heat treatment while controlling a mixing molar ratio of lithium to metals other than lithium to be in a range of 0.95 to 1.05.

10. The method of claim 9, wherein the first heat treatment is performed in an oxidizing gas atmosphere at 800 °C to 950 °C.

11. The method of claim 9, wherein the second heat treatment is performed at 700 °C to 800 °C.

12. The method of claim 9, wherein the nickel-based active material precursor is a compound represented by Formula 5 below:

[Formula 5] $\qquad Ni_{1-x-y-z}Co_xM1_yM2_z(OH)_2$

wherein, in Formula 5, M1 is one or two elements selected from the group consisting of manganese (Mn) and aluminum (Al),

M2 is one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr) and Al,

and $0.6 \leq (1-x-y-z) < 1$, $0 \leq x \leq 0.4$, $0 \leq y \leq 0.4$, and $0 \leq z \leq 0.4$.

13. A method of manufacturing a positive electrode active material for a lithium secondary battery, the method comprising: mixing a nickel-based active material precursor containing a lanthanide element and a lithium precursor, and performing a first heat treatment while controlling a mixing molar ratio of lithium to metals other than lithium to be in a range of 0.8 to 1; and

adding a lithium precursor to the first heat-treated product, and performing a second heat treatment while controlling a mixing molar ratio of lithium to metals other than lithium to be in a range of 0.95 and 1.05.

14. The method of claim 13, wherein the nickel-based active material precursor containing the lanthanide element is a compound represented by Formula 5-1 below:

[Formula 5-1] $\quad Ni_{1-w-x-y-z}M3_wCo_xM1_yM2_z(OH)_2$

wherein, in Formula 5, M1 is one or two elements selected from the group consisting of manganese (Mn) and aluminum (Al),

M2 is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and Al,

M3 is at least one element selected from the group consisting of lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu),

and $0.6 \leq (1-w-x-y-z) < 1$, $0 < w \leq 0.05$, $0 \leq x \leq 0.4$, $0 \leq y \leq 0.4$, and $0 \leq z \leq 0.4$.

## FIG. 1A

SDI 5.0kV 7.9mm x5.00k SE(M)  10.0μm

## FIG. 1B

SDI 5.0kV 7.9mm x10.0k SE(M)  5.0μm

FIG. 1C

SDI 5.0kV 7.9mm x20.0k SE(M)　　　　　2.00µm

FIG. 2A

SDI 5.0kV 7.8mm x5.00k SE(M)　　　　　10.0µm

FIG. 2B

SDI 5.0kV 7.8mm x10.0k SE(M)       5.00μm

FIG. 2C

SDI 5.0kV 7.8mm x20.0k SE(M)       2.00μm

## FIG. 3A

SDI 5.0kV 7.8mm x5.00k SE(M)                    10.0μm

## FIG. 3B

SDI 5.0kV 7.8mm x10.0k SE(M)                    5.00μm

## FIG. 3C

SDI 5.0kV 7.8mm x20.0k SE(M)                    2.00µm

## FIG. 4A

SDI 5.0kV 7.8mm x5.00k SE(M)                    10.0µm

## FIG. 4B

SDI 5.0kV 7.8mm x10.0k SE(M)    5.00μm

## FIG. 4C

SDI 5.0kV 7.8mm x20.0k SE(M)    2.00μm

# FIG. 5

# FIG. 6

## FIG. 7A

SDI 5.0kV 8.6mm x2.50k SE(M)          20.0μm

## FIG. 7B

SDI 5.0kV 8.6mm x2.50k SE(M)          20.0μm

FIG. 7C

SDI 5.0kV 8.6mm x2.50k SE(M)                    20.0μm

# FIG. 8

<table>
<tr><td colspan="2" align="center">**INTERNATIONAL SEARCH REPORT**</td><td>International application No.<br>**PCT/KR2022/005383**</td></tr>
</table>

| A. | CLASSIFICATION OF SUBJECT MATTER |
|---|---|
| | **H01M 4/525**(2010.01)i; **H01M 4/505**(2010.01)i; **C01G 53/00**(2006.01)i; **H01M 10/052**(2010.01)i |

According to International Patent Classification (IPC) or to both national classification and IPC

| B. | FIELDS SEARCHED |
|---|---|

Minimum documentation searched (classification system followed by classification symbols)

H01M 4/525(2010.01); C01G 53/00(2006.01); H01M 10/052(2010.01); H01M 10/0525(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 (cathode active material), 리튬 이차전지 (lithium secondary battery), 란탄족 (lanthanide), 대결정 (large crystalline), 산화세륨 (CeO2)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0125443 A (SAMSUNG SDI CO., LTD. et al.) 04 November 2020 (2020-11-04)<br>See abstract; paragraph [0198]; and claims 1, 2, 11, 16-18 and 21. | 1-14 |
| A | KR 10-2020-0107856 A (LG CHEM, LTD.) 16 September 2020 (2020-09-16)<br>See entire document. | 1-14 |
| A | US 2020-0062613 A1 (ECOPRO BM CO., LTD.) 27 February 2020 (2020-02-27)<br>See entire document. | 1-14 |
| A | YI, T.-F. et al. Porous sphere-like LiNi0.5Mn1.5O4-CeO2 composite with high cycling stability as cathode material for lithium-ion battery. Journal of Alloys and Compounds. 2017, vol. 703, pp. 103-113.<br>See entire document. | 1-14 |
| A | LIU, K. et al. Enhanced cycling stability and rate performance of Li[Ni0.5Co0.2Mn0.3]O2 by CeO2 coating at high cut-off voltage. Journal of Power Sources. 2015, vol. 281, pp. 370-377.<br>See entire document. | 1-14 |

| ☐ Further documents are listed in the continuation of Box C. | ☑ See patent family annex. |
|---|---|

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 July 2022** | **18 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<div style="text-align: center">

**INTERNATIONAL SEARCH REPORT**
Information on patent family members

</div>

| International application No. |
| --- |
| **PCT/KR2022/005383** |

| Patent document cited in search report | | | Publication date (day/month/year) | Patent family member(s) | | | Publication date (day/month/year) |
| --- | --- | --- | --- | --- | --- | --- | --- |
| KR | 10-2020-0125443 | A | 04 November 2020 | EP | 3733609 | A1 | 04 November 2020 |
| | | | | EP | 3733610 | A1 | 04 November 2020 |
| | | | | KR | 10-2020-0125442 | A | 04 November 2020 |
| KR | 10-2020-0107856 | A | 16 September 2020 | CN | 113678286 | A | 19 November 2021 |
| | | | | EP | 3876315 | A1 | 08 September 2021 |
| | | | | EP | 3876315 | A4 | 01 December 2021 |
| | | | | US | 2022-0029152 | A1 | 27 January 2022 |
| | | | | WO | 2020-180160 | A1 | 10 September 2020 |
| US | 2020-0062613 | A1 | 27 February 2020 | CN | 110858646 | A | 03 March 2020 |
| | | | | CN | 110858648 | A | 03 March 2020 |
| | | | | CN | 110858649 | A | 03 March 2020 |
| | | | | EP | 3613705 | A2 | 26 February 2020 |
| | | | | EP | 3613705 | A3 | 04 March 2020 |
| | | | | EP | 3613706 | A2 | 26 February 2020 |
| | | | | EP | 3613706 | A3 | 04 March 2020 |
| | | | | EP | 3613707 | A2 | 26 February 2020 |
| | | | | EP | 3613707 | A3 | 04 March 2020 |
| | | | | JP | 2020-029396 | A | 27 February 2020 |
| | | | | JP | 2020-031052 | A | 27 February 2020 |
| | | | | JP | 2020-031055 | A | 27 February 2020 |
| | | | | JP | 2021-141071 | A | 16 September 2021 |
| | | | | JP | 2022-009843 | A | 14 January 2022 |
| | | | | JP | 6804598 | B2 | 23 December 2020 |
| | | | | JP | 6884829 | B2 | 09 June 2021 |
| | | | | KR | 10-2020-0022310 | A | 03 March 2020 |
| | | | | KR | 10-2020-0022313 | A | 03 March 2020 |
| | | | | KR | 10-2020-0022320 | A | 03 March 2020 |
| | | | | KR | 10-2020-0022321 | A | 03 March 2020 |
| | | | | KR | 10-2020-0022328 | A | 03 March 2020 |
| | | | | KR | 10-2020-0033130 | A | 27 March 2020 |
| | | | | KR | 10-2021-0049764 | A | 06 May 2021 |
| | | | | KR | 10-2021-0075039 | A | 22 June 2021 |
| | | | | KR | 10-2195178 | B1 | 28 December 2020 |
| | | | | KR | 10-2225892 | B1 | 11 March 2021 |
| | | | | KR | 10-2248105 | B1 | 06 May 2021 |
| | | | | KR | 10-2262164 | B1 | 09 June 2021 |
| | | | | KR | 10-2265141 | B1 | 16 June 2021 |
| | | | | KR | 10-2323189 | B1 | 09 November 2021 |
| | | | | KR | 10-2323190 | B1 | 09 November 2021 |
| | | | | KR | 10-2327321 | B1 | 17 November 2021 |
| | | | | US | 11063247 | B2 | 13 July 2021 |
| | | | | US | 11078089 | B2 | 03 August 2021 |
| | | | | US | 2020-0067072 | A1 | 27 February 2020 |
| | | | | US | 2020-0067083 | A1 | 27 February 2020 |
| | | | | US | 2021-0288309 | A1 | 16 September 2021 |
| | | | | US | 2021-0309537 | A1 | 07 October 2021 |

Form PCT/ISA/210 (patent family annex) (July 2019)